# FASCICULE DE BREVET EUROPEEN

(11) **EP 1 731 837 B1**
(45) Date de publication et mention de la délivrance du brevet: **08.10.2014**
(21) Numéro de dépôt: 06076075.8
(22) Date de dépôt: 19.05.2006
(51) Int. Cl.: F23D 14/24, F23C 7/00, F23R 3/28

(54) **Système d'injection anti-rotatif pour turbo-reacteur**
Drehblockiertes Einspritzsystem für eine Turbine
Rotationally locked injection system for a turbine

(30) Priorité: 07.06.2005 FR 0551518
(43) Date de publication de la demande: 13.12.2006
(73) Titulaire: SNECMA, 75015 Paris (FR)
(72) Inventeur: Bernier, Daniel, 91300 Massy (FR); Lunel, Romain, 77170 Brie Compte Robert (FR); Marnas, Laurent, 77000 Vaux le Penil (FR)
(74) Mandataire: Ilgart, Jean-Christophe

(56) Documents cités:
- FR-A- 1 547 843
- US-A- 5 117 624
- US-A- 5 533 330

## Description

### DOMAINE TECHNIQUE

L'invention concerne un système d'injection de carburant pour turbo-réacteur. Plus précisément, elle concerne un système d'injection qui comprend une partie fixe et une traversée coulissante comportant une semelle montée coulissante sur une surface de glissement de la partie fixe du système d'injection, la partie fixe comportant des moyens anti-rotatifs et la semelle de la traversée coulissante comportant des moyens anti-rotatifs complémentaires qui coopèrent avec ceux de la partie fixe pour limiter la rotation de la traversée coulissante par rapport à la partie fixe.

Les chambres de combustion des turbo-réacteur comprennent une paroi intérieure et une paroi extérieure reliées à leurs extrémités amont par un fond annulaire pour définir un fond de chambre de combustion annulaire. Des systèmes d'injection régulièrement répartis sur la périphérie du fond de la chambre de combustion délivrent un mélange d'air et de carburant qui est enflammé pour fournir des gaz de combustion.

Un système d'injection est constitué d'une partie fixe qui comprend une, et plus généralement deux vrilles dans lesquelles l'air est entraîné en rotation, un venturi et un bol. La partie fixe comprend également une bague comportant une surface de glissement. Une traversée coulissante comporte une partie de centrage, généralement un cône, est destinée à centrer un injecteur de carburant par rapport à l'axe longitudinal de la vrille.

Il est connu dans l'état de la technique, de monter la traversée coulissante, coulissante par rapport à la partie fixe du système d'injection afin, d'une part, d'accommoder les déplacements relatifs de la chambre et de l'injecteur de carburant par suite des dilatations différentielles des différentes parties constitutives du moteur et, d'autre part, pour tenir compte des tolérances de fabrication. Le brevet US 5,117,624 décrit une traversée coulissante de ce type. Par ailleurs, il est nécessaire de prévoir des moyens anti-rotatifs afin d'empêcher une rotation de la traversée coulissante par rapport à la partie fixe du système d'injection. En effet, cette rotation, lorsqu'elle peut se produire, entraîne une usure rapide des pièces et réduit de manière importante leur durée de fonctionnement. Dans le dispositif décrit dans le brevet américain cité plus haut, ces moyens anti-rotatifs sont constitués par une cuvette présentant deux parois parallèles et par une semelle de la traversée coulissante comportant deux faces droites parallèles aux côtés de la semelle. Un jeu relativement important est prévu entre la semelle de la traversée coulissante et les faces droites de la cuvette afin de permettre, comme on l'a exposé précédemment, d'accommoder les dilatations différentielles et les tolérances de fabrication. Néanmoins, le jeu est suffisamment faible pour empêcher une rotation complète de la traversée coulissante par rapport à la cuvette du système d'injection. Toutefois, un dispositif anti-rotatif de ce type est difficile à fabriquer. Il est donc relativement coûteux.

La présente invention a précisément pour objet un système d'injection pour un moteur à turbine à gaz, en particulier pour la propulsion d'avions, qui comporte des moyens anti-rotatifs simples et donc peu coûteux à réaliser.

Ces buts sont atteints conformément à l'invention par le fait que les moyens anti-rotatifs de la semelle sont constitués par une ou plusieurs découpes formées dans la semelle et en ce que les moyens anti-rotatifs de la partie fixe sont constitués par un ou plusieurs ergots faisant saillie dans la ou les découpes de la semelle de la traversée coulissante.

Une telle solution est simple à réaliser. De plus, la découpe procure une diminution du poids de la traversée coulissante.

Dans une réalisation particulière, le ou les ergots font saillie à partir de la surface de glissement de la partie fixe du système d'injection.

Dans une autre réalisation, le ou les ergots font saillie à partir d'une bague de fermeture qui maintient la traversée coulissante sur la partie fixe du système d'injection.

La ou les découpes peuvent être ouvertes ou fermées.

Dans une autre réalisation encore, la semelle de la traversée coulissante comporte une première découpe et une seconde découpe, la première découpe étant relativement plus petite que la seconde découpe de manière que la première découpe limite seule la rotation de la traversée coulissante dans une première étape de fonctionnement, la seconde découpe limitant la rotation de la traversée coulissante après l'usure d'un ergot faisant saillie à l'intérieur de la découpe.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue générale en coupe d'une chambre de combustion de turbo-réacteur comportant un système d'injection conforme à la présente invention ;
- la figure 2 est une vue en coupe à échelle agrandie du système d'injection de la figure 1 ;
- la figure 3 est une vue en perspective de ce même système d'injection ;
- les figures 4 à 7 représentent quatre variantes de réalisation différentes des moyens anti-rotatifs d'un système d'injection conforme à l'invention.

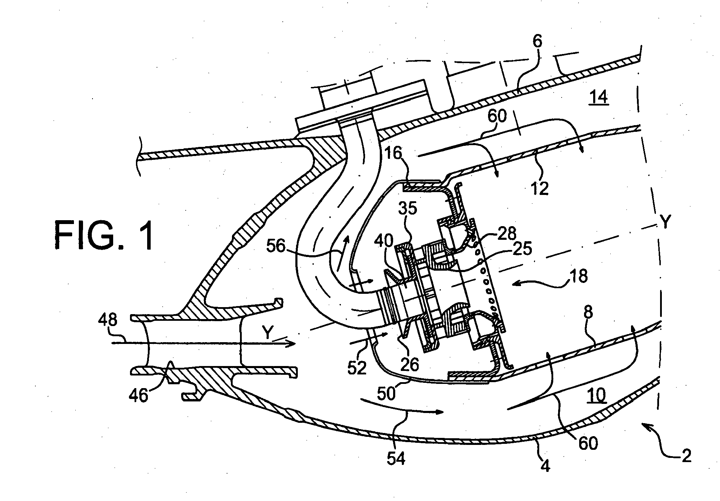

On a représenté sur la figure 1 une vue schématique partielle, en coupe d'une chambre de combustion de turbo-réacteur désignée par la référence générale 2 comportant un système d'injection conforme à la présente invention. La chambre de combustion 2 présente une forme de symétrie longitudinale de révolution par rapport à un axe général de la turbine. Elle comporte une paroi de carter intérieure 4 et une paroi de carter extérieure 6. Une paroi de chambre intérieure 8 délimite un passage 10 avec la paroi de carter intérieure 4 et une paroi de chambre extérieure 12 délimite un passage 14 avec la paroi de carter extérieure 6.

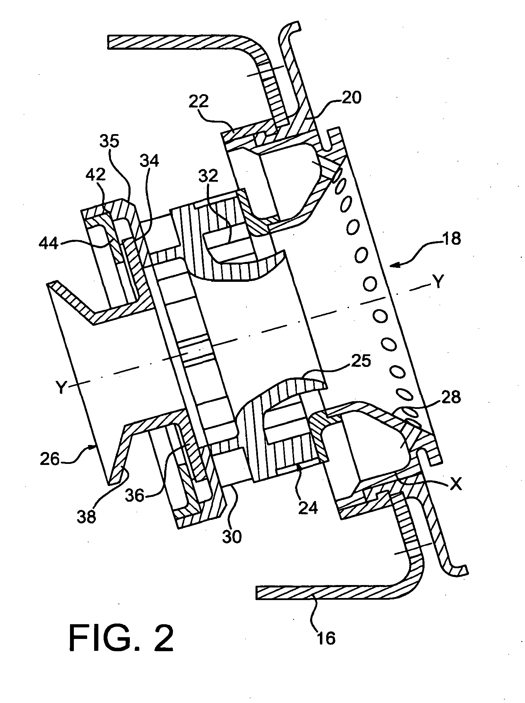

Les parois de chambre intérieure 8 et extérieure 12 sont réunies par un fond de chambre 16 à leurs extrémités amont. Une pluralité de système d'injection, typiquement quatorze à vingt-deux, régulièrement espacés angulairement (un seul système d'injection a été représenté sur la figure 1) sont prévus sur le fond de chambre 16. Comme on peut le voir plus en détail sur la figure 2, chaque système d'injection 18 comprend une partie fixe constituée d'une bague 35 d'une vrille 24, d'un venturi 25 et d'un bol 28. Une traversée coulissante 26 est montée coulissante sur la bague 35. La vrille 24 est montée sur un bol 28 présentant une forme évasée raccordée au fond de chambre 16 par l'intermédiaire d'un déflecteur 20 et d'une bague fendue 22. La vrille 24 comporte un premier étage d'aubes 30, et un deuxième étage d'aubes 32 qui ont pour fonction d'entraîner l'air en rotation autour de l'axe longitudinal Y-Y du système d'injection. Les aubes des étages 30 et 32 peuvent être de même sens ou de sens contraire. Une surface de glissement 34 est prévue sur la bague 35. La traversée coulissante est montée glissante sur la surface de glissement de la bague 35. A cet effet, la traversée 26 comporte une semelle 36 apte à glisser sur la surface de glissement de la bague 34. La traversée coulissante comporte en outre une partie de centrage, par exemple un cône de centrage 38, destinée à centrer un injecteur de carburant 40 (figure 1) par rapport au système d'injection 18.

La surface de glissement est prolongée extérieurement par un rebord périphérique 42 de manière à former une chambre peu profonde dans laquelle la semelle 36 est retenue. La chambre est fermée par une coupelle 44 constituant une bague de fermeture.

Un jeu relativement important est prévu entre la périphérie de la semelle 36 de la traversée coulissante 26 et le rebord 42 situé à la périphérie de la bague 34. Ce jeu relativement important a pour but d'accommoder les différences de dilatation différentielle qui se produisent entre la chambre de combustion, portée à une température élevée et l'injecteur de carburant plus froid. D'autre part, il permet d'accommoder les tolérances de fabrication de manière que l'injecteur 40 puisse se centrer sur le carburateur lorsque l'on monte la chambre de combustion sur les injecteurs.

Le fonctionnement du module chambre de combustion est le suivant. L'air sous pression en provenance du compresseur pénètre dans la chambre de combustion par le passage 46, comme schématisé par la flèche 48. Une partie de l'air passe dans l'ouverture centrale du carénage 50 comme schématisé par les flèches 52, tandis que le reste du flux d'air est dirigé par l'extérieur du carénage 50 vers les passages 10 et 14, comme schématisé par les flèches 54 et 56. Des ouvertures 58 sont prévues dans les parois intérieure et extérieure 8 et 12 de la chambre de combustion afin de permettre l'entrée de l'air à partir des passages 10 et 14 comme schématisé par les flèches 60.

L'air qui pénètre dans le carénage 50 est mis en rotation dans les étages 30 et 32 de la vrille et il se mélange au carburant délivré par l'injecteur 40. Le mélange gazeux pénètre dans la chambre de combustion dans laquelle il est enflammé.

De manière connue, le système injecteur 18 comporte des moyens anti-rotatifs pour empêcher la rotation de la traversée coulissante par rapport à la partie fixe du système injecteur. En effet, en l'absence de tels moyens anti-rotatifs, la traversée coulissante, qui doit pouvoir se déplacer librement par rapport à la surface de glissement 34, pourrait tourner autour de l'axe Y-Y, notamment sous l'effet des vibrations, ce qui se traduirait par une usure importante et, par conséquent, par une réduction importante de la durée de vie du système d'injecteur et d'axe d'injecteur.

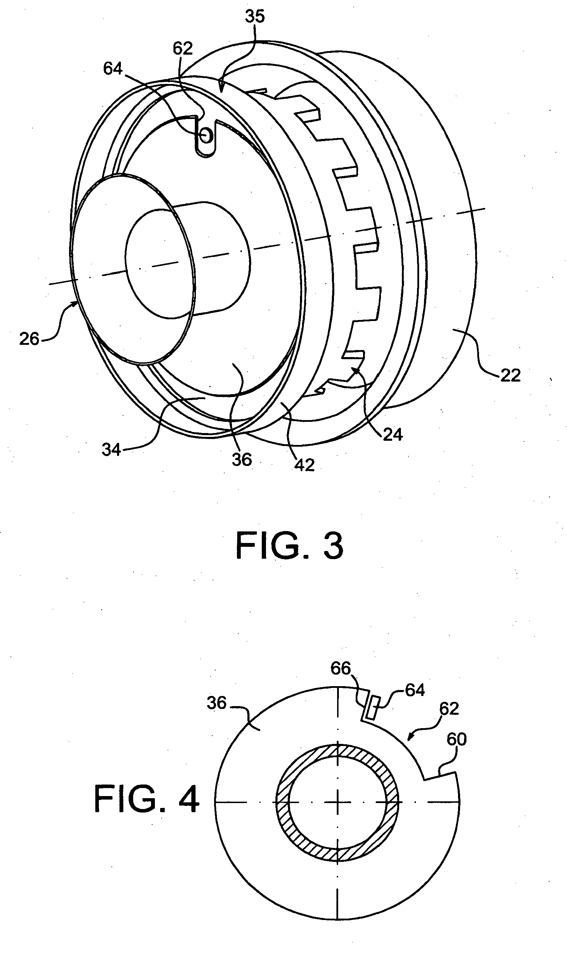

Comme on peut le voir sur la figure 3 qui représente une vue en perspective du système d'injection 18 de l'invention, la bague de fermeture 44 ayant été ôtée, les moyens anti-rotatifs sont constitués par une découpe 62 formée dans la semelle 36 et par un ergot complémentaire 64 formé dans la surface de glissement 34 de la vrille. Comme on le remarque en outre sur la figure 3, un jeu relativement important est prévu entre l'ergot 64 et la périphérie de la découpe 62 de manière à ne pas empêcher le déplacement de la traversée coulissante par rapport à la surface de glissement 34, ce qui permet l'accommodation des jeux et des dilatations différentielles comme on l'a expliqué antérieurement. Toutefois, la traversée coulissante ne peut pas se déplacer par rapport à la vrille de manière telle que l'ergot 64 sorte de l'ouverture 62, de telle sorte que la rotation de la traversée coulissante est empêchée. La traversée coulissante peut pivoter d'un certain angle, qui est fonction du jeu entre l'ouverture 62 et l'ergot, jusqu'à ce que l'ergot vienne en butée contre la paroi de l'ouverture. Après cela, la rotation de la traversée coulissante est bloquée.

En variante de réalisation, le ou les ergots 64 peuvent également être formés à partir de la surface de la bague de fermeture 44 qui fait face à la semelle 36 de la traversée coulissante. Ou bien encore, dans une autre variante de réalisation, lorsque la semelle 36 comporte plusieurs découpes, certains des ergots peuvent être formés à partir de la surface de glissement 34, tandis que d'autres sont formés à partir de la bague de fermeture 44.

Etant donné que les pièces qui constituent le carburateur de l'invention sont réalisées en des matériaux très durs, par exemple en acier spécial, la manière la plus avantageuse de les réaliser est le moulage. Ainsi, l'ergot 64 et la découpe 62 peuvent être obtenus directement de fonderie. Toutefois, dans une variante de réalisation, ces parties peuvent également être usinées. On réalise ainsi, de manière simple et peu coûteuse des moyens anti-rotatifs empêchant la rotation de la traversée coulissante par rapport à la bague de la partie fixe du système d'injection.

La découpe peut présenter des formes très variées sans sortir du cadre de l'invention. Ainsi, comme représenté sur la figure 4, l'ergot 64 peut présenter une forme sensiblement rectangulaire et la découpe 62 la forme d'un secteur comportant deux parois planes 66 sur lesquelles l'ergot 62 vient prendre appui.

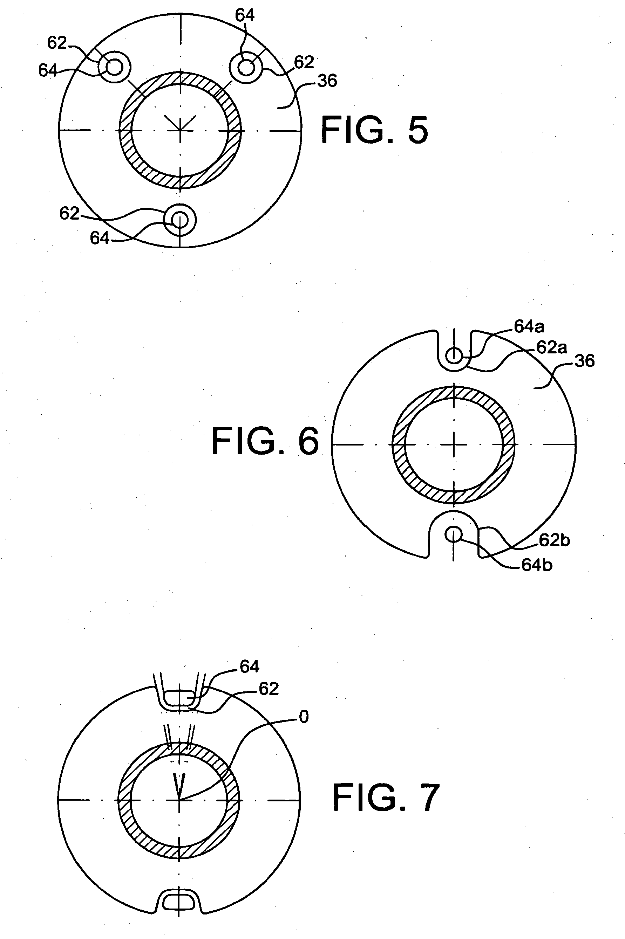

La découpe peut être ouverte, comme sur les figures 3 et 4. Elle peut également être fermée, comme représenté sur la figure 5. Dans ce mode de réalisation, la semelle 36 comporte trois perforations circulaires 62 constituant des découpes et trois ergots 64, un ergot pénétrant à l'intérieur de chacun des orifices circulaires 62.

La figure 6 représente encore un autre mode de réalisation. La semelle 36 comporte une découpe 62a et une découpe 62b, la découpe 62a étant relativement plus petite que la découpe 62b. De la sorte, c'est l'ergot 64a, situé à l'intérieur de la découpe 62a qui limite la rotation de la traversée coulissante. En conséquence, l'ergot 64b, situé à l'intérieur de la découpe 62b, n'est sujet à aucune usure. Si l'ergot 62a vient à se rompre par suite d'usure, l'ergot 64b entre en fonction ce qui double la durée de vie des moyens anti-rotatifs.

La figure 7 représente un quatrième mode de réalisation. La découpe 62 et l'ergot 64 possèdent des bords latéraux dont le prolongement passe par l'axe de révolution 0 du bol et donc par l'axe de l'injecteur (en fonctionnement).

## Revendications

1. Système d'injection de carburant pour turbo-réacteur comportant une partie fixe (24) et une traversée coulissante (26) comportant une semelle (36) montée coulissante sur une surface de glissement de la partie fixe, la partie fixe (24) comportant des moyens anti-rotatifs et la semelle de la traversée coulissante (26) comportant des moyens anti-rotatifs complémentaires qui coopèrent avec les moyens anti-rotatifs de la traversée coulissante pour limiter la rotation de la traversée coulissante par rapport à la partie fixe, **caractérisé en ce que** les moyens anti-rotatifs de la semelle coulissante sont constitués par au moins une découpe (62) formée dans la semelle (36) et **en ce que** les moyens anti-rotatifs de la partie fixe sont constitués par au moins un ergot (64) faisant saillie dans ladite au moins une découpe (62) de la semelle de la traversée coulissante.

2. Système d'injection selon la revendication 1, **caractérisé en ce qu'**un ou des ergots (64) font saillie à partir de la surface de glissement (34) de la partie fixe.

3. Système d'injection selon la revendication 1 ou 2, **caractérisé en ce qu'**un ou des ergots (64) font saillie à partir d'une bague de retenue (44) qui maintient la traversée coulissante (26) sur la partie fixe.

4. Système d'injection selon l'une des revendications 1 à 3, **caractérisé en ce que** la ou les découpes (62) sont ouvertes.

5. Système d'injection selon l'une des revendications 1 à 3, **caractérisé en ce que** la ou les découpes (62) sont fermées.

6. Système d'injection selon l'une quelconque des revendications 1 à 5, **caractérisé en ce que** la semelle (36) de la traversée coulissante comporte une première découpe (62a) et une seconde découpe (62b), la première découpe (62a) étant relativement plus petite que la seconde découpe (62b) de manière que la première découpe (62a) et un ergot (64a) faisant saillie à l'intérieur de cette découpe limitent seul la rotation de la traversée coulissante dans une première étape de fonctionnement, la seconde découpe (62b) limitant la rotation de la traversée coulissante après l'usure de l'ergot (64a) faisant saillie à l'intérieur de la découpe (62a).

## Patentansprüche

1. Treibstoffeinspritzsystem für ein Turbostrahltriebwerk, umfassend einen festen Teil (24) und eine Schiebedurchführung (26), die eine Fußplatte (36) umfasst, welche an einer Gleitfläche des festen Teils verschiebbar angebracht ist, wobei der feste Teil (24) Verdrehsicherungsmittel umfasst und die Fußplatte der Schiebedurchführung (26) ergänzende Verdrehsicherungsmittel umfasst, die mit den Verdrehsicherungsmitteln der Schiebedurchführung zusammenwirken, um die Drehung der Schiebedurchführung gegenüber dem festen Teil zu begrenzen, **dadurch gekennzeichnet, dass** die Verdrehsicherungsmittel der verschiebbaren Fußplatte durch wenigstens einen in der Fußplatte (36) ausgebildeten Ausschnitt (62) gebildet sind und dass die Verdrehsicherungsmittel des festen Teils durch wenigstens einen Zapfen (64) gebildet sind, der in den wenigstens einen Ausschnitt (62) der Fußplatte der Schiebedurchführung vorspringt.

2. Einspritzsystem nach Anspruch 1, **dadurch gekennzeichnet, dass** ein oder mehrere Zapfen (64) von der Gleitfläche (34) des festen Teils vorspringen.

3. Einspritzsystem nach Anspruch 1 oder 2, **dadurch gekennzeichnet, dass** ein oder mehrere Zapfen (64) von einem Haltering (44), welcher die Schiebedurchführung (26) an dem festen Teil hält, vorspringen.

4. Einspritzsystem nach einem der Ansprüche 1 bis 3, **dadurch gekennzeichnet, dass** der oder die Ausschnitte (62) offen sind.

5. Einspritzsystem nach einem der Ansprüche 1 bis 3, **dadurch gekennzeichnet, dass** der oder die Ausschnitte (62) geschlossen sind.

6. Einspritzsystem nach einem der Ansprüche 1 bis 5, **dadurch gekennzeichnet, dass** die Fußplatte (36) der Schiebedurchführung einen ersten Ausschnitt (62a) und einen zweiten Ausschnitt (62b) umfasst, wobei der erste Ausschnitt (62a) relativ kleiner als der zweite Ausschnitt (62b) ist, so dass der erste Ausschnitt (62a) und ein Zapfen (64a), der in diesem Ausschnitt vorspringt, nur die Drehung der Schiebedurchführung in einem ersten Betriebsschritt begrenzen, wobei der zweite Ausschnitt (62b) die Drehung der Schiebedurchführung nach dem Verschleiß des in dem Ausschnitt (62a) vorspringenden Zapfens (64a) begrenzt.

## Claims

1. Fuel injection system for a turbojet comprising a fixed part (24) and a sliding crossmember (26) comprising a flange (36) mounted so as to slide on a sliding surface of the fixed part, the fixed part (24) comprising antirotation means and the flange of the sliding crossmember (26) comprising complementary antirotation means which interact with the antirotation means of the sliding crossmember to limit the rotation of the sliding crossmember relative to the fixed part, wherein the antirotation means of the sliding flange consist of at least one cutout (62) formed in the flange (36) and in that the antirotation means of the fixed part consist of at least one lug (64) protruding into said at least one cutout (62) of the flange of the sliding crossmember.

2. Injection system according to Claim 1, **characterized in that** one or more lugs (64) protrude from the sliding surface (34) of the fixed part.

3. Injection system according to Claim 1 or 2, **characterized in that** one or more lugs (64) protrude from a retention ring (44) which holds the sliding crossmember (26) on the fixed part.

4. Injection system according to one of Claims 1 to 3, **characterized in that** the cutout or cutouts (62) are open.

5. Injection system according to one of Claims 1 to 3, **characterized in that** the cutout or cutouts (62) are closed.

6. Injection system according to any one of Claims 1 to 5, **characterized in that** the flange (36) of the sliding crossmember comprises a first cutout (62a) and a second cutout (62b), the first cutout (62a) being relatively smaller than the second cutout (62b) so that the first cutout (62a) and a lug (64a) protruding into this cutout limit only the rotation of the sliding crossmember in a first operating step, the second cutout (62b) limiting the rotation of the sliding crossmember after the lug (64a) protruding into the cutout (62a) is worn.
